# EUROPEAN PATENT SPECIFICATION

(11) **EP 3 287 261 B1**
(45) Date of publication and mention of the grant of the patent: **02.10.2024**
(21) Application number: 17187583.4
(22) Date of filing: 23.08.2017
(51) Int. Cl.: B29C 65/60, B29C 65/18, B29C 65/06, B29C 65/78, B29C 65/48, B29C 65/56

(54) **IMPROVEMENTS IN OR RELATING TO HEAT STAKES**
VERBESSERUNGEN AN ODER IM ZUSAMMENHANG MIT HEISSVERNIETEN
PERFECTIONNEMENTS APPORTÉS OU SE RAPPORTANT AU BOUTEROLLAGE A CHAUD

(30) Priority: 26.08.2016 GB 201614545
(43) Date of publication of application: 28.02.2018
(73) Proprietor: Ford Global Technologies, LLC, Dearborn, MI 48126 (US)
(72) Inventor: LAMB, Daniel, Essex SS15 4AL (GB)
(74) Representative: Haley Guiliano International LLP

(56) References cited:
- EP-A1- 0 368 809
- DE-C- 623 911
- DE-C1- 3 932 294
- JP-A- 2014 226 698
- US-A- 4 865 680
- US-A1- 2016 061 245

## Description

This invention relates to improvements in or relating to the provision of heat stakes and, in particular, to the attachment of heat stakes and their interfacing parts onto surfaces.

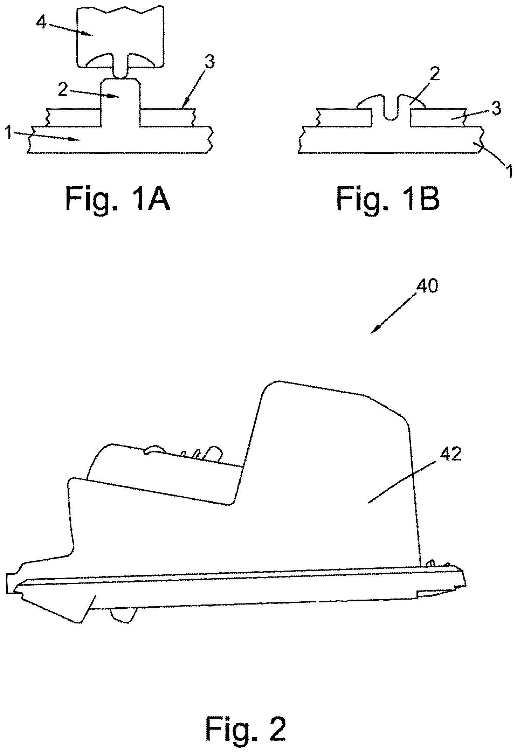

It is frequently necessary to attach together two interfacing parts. One method of achieving this is via the provision of a heat stake, as illustrated in Figures 1A and 1B. This shows a base 1 provided with a stake 2 and an interfacing part 3. The action of heat staking joins the interfacing part 3 to the base 1. This occurs when a tool 4 is brought into contact with the stake 2 which deforms thus holding the base 1 and the interfacing part 3 together. The tool 4 may operate by any one of a number of different methods, including vibration.

In order for this technique to be effective the stake 2 needs to be manufactured as an integral part of the base 1.

However, there are some applications and locations where parts could be effectively joined through heat staking, but the base cannot be manufactured with an integral stake.

JP 2014 226698 A relates to a rivet joint structure in which joining of dissimilar metal members is performed by welding through a rivet that penetrates one member and abuts against the other member, in order to provide a rivet joint structure which suppresses the softening of a second member, and stabilizes weld strength.

It is against this background that the present invention has arisen.

According to the present invention there is provided a system comprising an apparatus; a stake; an interfacing part; an adhesive and a base, wherein the apparatus is configured to enable the staking of the interfacing part to the base, the apparatus comprising a retainer configured to convey a stake and the interfacing part to the base, the apparatus configured to provide a heat and/or vibration to effect the simultaneous attachment of the stake to the base and the interfacing part to the base, wherein the stake is temporarily attached to the interfacing part; and characterised in that the temporary attachment of the stake to the interfacing part is via the adhesive.

The apparatus enables the stake to be attached to the base simultaneously with the interfacing part being attached to the base. This is very useful in circumstances where the nature or orientation of the base means that the stake cannot be formed integrally with the base. For example, where the stake would need to extend perpendicular to the extraction direction of the moulding tool so the stake cannot be formed at that location.

The stake may be hollow and the apparatus may further comprise a metal rod configured to extend through the stake. The metal rod can prevent the stake from flexing and also act as a thermal guide during the attachment process.

The metal rod may protrude from the apparatus to a position adjacent to, but not touching, the base, in use. This allows the rod to guide the stake and ensure that it is correctly positioned and does not flex. It also helps heat to be transferred throughout the length of the rod.

The metal rod may be configured to retract into the apparatus during the attachment process. During the attachment process the application of heat, pressure or a combination of heat and pressure causes the stake to melt and adhere the interfacing part to the base. As a result, of the friction, pressure and/or heat, the stake will spread laterally between the base and the interfacing part. As a result, its extent in a direction orthogonal to the base will diminish during the attachment process. Therefore, in order to prevent the metal rod from coming into contact with the base, the metal rod may be configured to be retracted into the apparatus during the attachment process.

Furthermore, according to the present invention there is provided a method of staking an interfacing part to a base, the method comprising simultaneously attaching a stake and the interfacing part to the base, wherein the stake is temporarily attached to the interfacing part, and characterised in that the temporary attachment is effected by an adhesive .

This allows the stake to be introduced into the staking equipment. The stake and interfacing part are therefore brought together to the location of the base, which may be positioned within a vehicle.

The stake and interfacing part may be brought into contact with the base. The attachment of the stake and the interfacing part may occur through a combination of friction, heat and/or pressure melting the stake.

The invention will now be further and more particularly described, by way of example only, and with reference to the accompanying drawings, in which:
Figures 1A and 1B show the state of the art for heat staking;
Figure 2 shows the apparatus according to the present invention;
Figures 3A to 3C show a first embodiment of the invention; and
Figures 4A to 4C show a second embodiment of the invention.

Figure 2 shows an embodiment of the apparatus 40 which is configured to enable the staking of an interfacing part to a base. The apparatus 40 includes a retainer 42 which is configured to hold the stake 20 and the interfacing part 30. The retainer 42 may include a separate retainer for the stake 20 and the interfacing part 30. Alternatively, there may be a single retainer that holds the interfacing part and the stake that have been temporarily attached one to the other. The temporary attachment of the stake 20 to the interfacing part 30 is effected via the use of an adhesive.

In other embodiments that are not part of the present invention, the temporary attachment of the stake 20 to the interfacing part 30 may be effected through the provision of an interference fit between the two parts.

The apparatus 40 further comprises a metal rod 44 that protrudes through the stake 20 in order to guide the stake 20 into the optimum position. The rod 44 is metal so that it will also guide heat through the stake 20 to aid the melting of the stake 20.

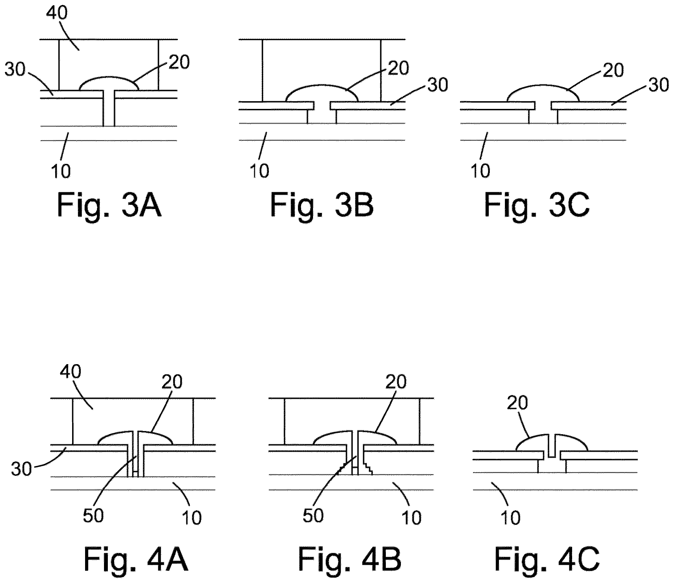

Figures 3A to 3C show a cross section through the apparatus 40 in the vicinity of the stake 20 at three different stages of the attachment process. As illustrated in Figure 3A, the apparatus 40 has positioned the stake 20 and the interfacing part 30 above a base 10 to which the stake 20 and interfacing part 30 are to be attached.

Figure 3B shows the relative position of the base 10, stake 20 and interfacing part 30 following the application of friction, heat and/or pressure which results in the melting and subsequent deformation of the stake 20. The stake 20 comes into contact with and attaches to the base 10 and deforms into the space between the base 10 and the interfacing part 30 in order to attach the interfacing part 30 to the base 10.

Figure 3C shows the completed part once the apparatus 40 has been removed. The base 10 is attached firmly via the stake 20 to the interfacing part 30.

Figures 4A to 4C show a second embodiment of the present invention which differs from the embodiment shown in Figures 3A to 3C by the addition of a metal rod 50. The metal rod 50 extends from the apparatus 40 through the core of the stake 20, which is hollow. As will be apparent from Figure 4B, the rod 50 is retracted through the stake 20 during the attachment process in order to allow the base 10 and interfacing part 30 to move towards one another.

The invention is applicable in various locations where the materials used or the manufacturing constraints make the deployment of a standard heat stake impractical. One example is a vehicle hydrocarbon trap which needs to be attached to the lid of an air cleaner. Due to the limited space available it is not possible to fit the hydrocarbon trap on the roof of the air cleaner. Because heat stakes could only be manufactured into the lid of the air cleaner, this was the only viable position for the hydrocarbon trap. However, the space constraints within the vehicle meant that the only space for locating the hydrocarbon trap was on the side of the air cleaner. The method and apparatus described herein make this heat staking the hydrocarbon trap to the side of the air cleaner possible.

It will further be appreciated by those skilled in the art that although the invention has been described by way of example with reference to several embodiments it is not limited to the disclosed embodiments and that alternative embodiments could be constructed without departing from the scope of the invention as defined in the appended claims.

## Claims

1. A system comprising:
an apparatus (40);
a stake (20);
an interfacing part (30);and
a base (10);
wherein the apparatus (40) is configured to enable the staking of the interfacing part (30) to the base (10), the apparatus (40) comprising a retainer (42) configured to convey the stake (20) and the interfacing part (30) to the base (10), the apparatus (40) configured to provide a heat and/or vibration to effect the simultaneous attachment of the stake (20) to the base (10) and the interfacing part (30) to the base (10), wherein the stake (20) is temporarily attached to the interfacing part (30); and
**characterised in that** the temporary attachment of the stake (20) to the interfacing part (30) is via an adhesive.

2. The system according to claim 1, wherein the stake (20) is hollow.

3. The system according to claim 2, the apparatus (40) further comprising a metal rod (50) configured to extend through the stake (20).

4. The system according to claim 3, wherein the metal rod (50) is configured to protrude from the apparatus (40).

5. The system according to claim 4, wherein the metal rod (50) is configured to retract into the apparatus (40) during the attachment process.

6. A method of staking an interfacing part (30) to a base (10), the method comprising:
simultaneously attaching a stake (20) and the interfacing part (30) to the base (10), wherein the stake (20) is temporarily attached to the interfacing part (30), and
**characterised in that** the temporary attachment is effected by an adhesive.

7. The method according to claim 6, wherein the stake (20) and interfacing part (30) are brought into contact with the base (10).

8. The method according to claim 6 or 7, wherein the attachment of the stake (20) and the interfacing part (30) occurs through a combination of heat and pressure melting the stake (20).

## Patentansprüche

1. System, umfassend:
eine Einrichtung (40);
eine Niete (20);
ein Kopplungsteil (30); und
eine Basis (10);
wobei die Einrichtung (40) dazu konfiguriert ist, das Vernieten des Kopplungsteils (30) mit der Basis (10) zu ermöglichen, wobei die Einrichtung (40) eine Aufnahme (42) umfasst, welche dazu konfiguriert ist, die Niete (20) und das Kopplungsteil (30) zu der Basis (10) zu befördern, wobei die Einrichtung (40) dazu konfiguriert ist, eine Wärme und/oder Vibration bereitzustellen, um die gleichzeitige Befestigung der Niete (20) an der Basis (10) und des Kopplungsteils (30) an der Basis (10) zu bewirken, wobei die Niete (20) vorübergehend an dem Kopplungsteil (30) befestigt wird; und
**dadurch gekennzeichnet, dass** die vorübergehende Befestigung der Niete (20) an dem Kopplungsteil (30) über einen Klebstoff erfolgt.

2. System nach Anspruch 1, wobei die Niete (20) hohl ist.

3. System nach Anspruch 2, wobei die Einrichtung (40) weiter eine Metallstange (50) umfasst, welche dazu konfiguriert ist, sich durch die Niete (20) zu erstrecken.

4. System nach Anspruch 3, wobei die Metallstange (50) dazu konfiguriert ist, von der Einrichtung (40) vorzustehen.

5. System nach Anspruch 4, wobei die Metallstange (50) dazu konfiguriert ist, sich während des Befestigungsprozesses in die Einrichtung (40) zurückzuziehen.

6. Verfahren zum Vernieten eines Kopplungsteils (30) mit einer Basis (10), wobei das Verfahren umfasst:
gleichzeitiges Befestigen einer Niete (20) und des Kopplungsteils (30) an der Basis (10), wobei die Niete (20) vorübergehend an dem Kopplungsteil (30) befestigt wird; und
**dadurch gekennzeichnet, dass** die vorübergehende Befestigung durch einen Klebstoff bewirkt wird.

7. Verfahren nach Anspruch 6, wobei die Niete (20) und das Kopplungsteil (30) mit der Basis (10) in Kontakt gebracht werden.

8. Verfahren nach Anspruch 6 oder 7, wobei die Befestigung der Niete (20) und des Kopplungsteils (30) während einer Kombination von Wärme und Druck auftritt, wodurch die Niete (20) schmilzt.

## Revendications

1. Système comprenant :
un appareil (40) ;
un jalon (20) ;
une partie d'interface (30) ; et
une base (10) ;
dans lequel l'appareil (40) est configuré pour permettre le jalonnement de la partie d'interface (30) à la base (10), l'appareil (40) comprenant un dispositif de retenue (42) configuré pour transporter le jalon (20) et la partie d'interface (30) à la base (10), l'appareil (40) configuré pour fournir une chaleur et/ou une vibration pour effectuer la fixation simultanée du jalon (20) à la base (10) et de la partie d'interface (30) à la base (10), dans lequel le jalon (20) est temporairement fixé à la partie d'interface (30) ; et
**caractérisé en ce que** la fixation temporaire du jalon (20) à la pièce d'interface (30) se fait via un adhésif.

2. Système selon la revendication 1, dans lequel le jalon (20) est creux.

3. Système selon la revendication 2, l'appareil (40) comprenant en outre une tige métallique (50) configurée pour s'étendre à travers le jalon (20).

4. Système selon la revendication 3, dans lequel la tige métallique (50) est configurée pour faire saillie depuis l'appareil (40).

5. Système selon la revendication 4, dans lequel la tige métallique (50) est configurée pour se rétracter dans l'appareil (40) pendant le processus de fixation.

6. Procédé de jalonnement d'une pièce d'interface (30) à une base (10), le procédé comprenant :
la fixation simultanée d'un jalon (20) et de la partie d'interface (30) à la base (10), dans lequel le jalon (20) est temporairement fixé à la partie d'interface (30), et
**caractérisé en ce que** la fixation temporaire est réalisée par un adhésif.

7. Procédé selon la revendication 6, dans lequel le jalon (20) et la partie d'interface (30) sont mis en contact avec la base (10).

8. Procédé selon la revendication 6 ou 7, dans lequel la fixation du jalon (20) et de la partie d'interface (30) s'effectue par une combinaison de chaleur et de pression faisant fondre le jalon (20).
